# EUROPEAN PATENT APPLICATION

(11) **EP 4 817 406 A1**
(43) Date of publication of application: **07.10.2026**
(21) Application number: 26168565.5
(22) Date of filing: 27.03.2026
(51) Int. Cl.: A01G 17/00, G01C 15/00, E01F 7/04, G01V 1/01, A01G 17/04

(54) **DEVICE, INSTALLATION AND METHOD FOR DETECTING SURFACE LANDSLIDE PHENOMENA IN VINEYARDS**

(30) Priority: 31.03.2025 IT 202500006798
(71) Applicant: Officine Maccaferri S.p.A., 20122 Milano (MI) (IT)
(72) Inventor: ADAMI, Mario, 31020 Vidor (TV) (IT); GAGLIARDI, Antoine, 40126 Bologna (BO) (IT)
(74) Representative: Provvisionato, Paolo

(57) **Abstract**

A sensorized vineyard pole (21) for supporting a row in an espalier type vineyard (1), in particular on a slope, is configured to detect surface landslide phenomena. The pole has a structural body (22) which supports a detection device (6) with an electronic assembly (23). The electronic assembly (23) comprises at least one inclination and/or movement sensor (11) suitable for detecting the inclination and/or movement of the pole, an electronic controller (12) which is programmed to emit an event signal which indicates a signal which is sent to the electronic controller from the inclination and/or movement sensor (11) and a transmitter (14) which is connected to the electronic controller (12) and provided to transmit the event signal which is emitted by the electronic controller.

## Description

### Field of the invention

The present invention relates to monitoring subsidence-related surface landslides on reliefs and slopes cultivated with vineyards.

The invention has been developed with particular regard to a device and a method for detecting any surface landslide phenomena in areas cultivated with vineyards which develop over hilly or mountainous areas with the purpose both of predictive analysis and of monitoring the stability and efficacy of the engineering solutions adopted to overcome landslide phenomena which have already occurred in the sloping zones on which the vineyards have been developed. The invention further relates to the installation of espalier type vineyards comprising such devices and the use of a device of the type claimed for detecting and predicting surface landslips in a vineyard.

### Technological background

The cultivation of vines and the resultant wine production are important economic activities which have been developed over extremely extensive areas of territory with most varied orography which comprises flat, coastal, hilly and mountainous zones which contribute - each with their own characteristics - to the growth of numerous and valuable grape varieties.

The cultivation of grapevines in zones on the slopes of hilly and mountainous zones presents additional difficulties with respect to the cultivation on flat land. The sloping ground areas are in fact highly vulnerable to erosion of the soil and resultant landslips. The hydrogeological instability may affect areas with great hilly and mountainous surfaces as well as zones with average inclines when the structure of the ground is not very stable or as a result of very intense atmospheric events, as have been recorded with increasing frequency over the past few years.

A particular problem which affects the cultivation of grape varieties on reliefs and inclines is so-called "micro-slips", that is to say micro-surface landslides which have a modest fracture line, for example, with an extent no greater than two metres. These micro-slips may affect a limited portion of a vineyard, for example, a pair of rows of vines, which however may result in a significant loss of productivity for the small farmers who develop their own vineyards on areas of a few hectares, at times over a single hectare of land. This is because restoration work for these small landslips may involve costs which compromise the profitability even for a couple of years, which is clearly not sustainable for small grape varieties growers who therefore tend to gradually abandon the cultivation on reliefs in order to move towards the flat areas.

On the other hand, several zones which are valuable for cultivating grape varieties are particularly defined within hilly or mountainous areas, such as, for example, the UNESCO area Valdobbiadene Conegliano, or other valuable areas, such as the area of Valpolicella, or areas with important vineyards in Piedmont, Tuscany, Sicily and in many other Italian regions, not to mention valuable production zones in other countries, such as France, Austria, Germany and many other European countries and nations of the world which suffer from similar problems.

In order to deal with and manage these critical situations, there have been conceived and consolidated public and private entities, consortiums and associations of growers and producers which have the objective of safeguard the cultivation of grape varieties, providing tools for analysing, preventing and solving problems of poor hydrogeological state. However, while there exist known solutions which are consolidated for monitoring and preventing great landslips, such as, for example, the one described in the prior art document WO2006022501, which provide, for example, for the excavation of deep wells, in which to introduce sensors which detect deep-lying geological movements and solutions which are known in the geotechnical field for monitoring the evolution of landslips which belong to a wider range which extends from deep landslips to ones closer to the surface, such as, for example, the ones described in the prior art documents US2012101729 and WO2020026137, there is still not provided a system which allows the possible formation and development of micro-slips to be checked, nor is there a system which allows predictive analysis thereof on the basis of geological measurements which is optimized and suitable both to be used in a vineyard and to act as a structural element in the vineyard itself. This is a result not only of the characteristics of micro-slips, which develop with movements of a relatively small size over areas with a very limited extension, but also as a result of the absence of monitoring instruments, devices and infrastructures which can be disseminated at low cost and with a high installation density over wide areas cultivated with vines.

The prior art in terms of sensor systems applied to the field of viticulture is actually limited to the installation of meteorological detection stations which are coupled to support poles in the region of rows of vines, as described, for example, in "Grant Stan: Systematic vineyard monitoring for effective vineyard management | Lodi Growers", which can be found at the Internet address https://lodigrowers.com/systematic-vineyard-monitoring-for-effective-vineyard-management/.

### Statement of invention

An object of the present invention is to overcome the disadvantages of the prior art by providing a device capable of detecting any micro-slip phenomena in the field of vineyards, with particular reference to grape varieties cultivated on reliefs and inclines in hilly and mountainous regions, which does not provide for the excavation of deep wells or installations which are costly and complex, thereby allowing areas which are also relatively extensive to be monitored with reduced investment.

Another object of the present invention is to provide a device which allows data to be collected from vineyards which can then be used to carry out predictive analysis about the formation of micro-slips and to check the development thereof in addition to checking the stability and efficacy of potential engineering solutions which are used to resolve micro-slip phenomena which have already occurred on reliefs which are cultivated with vineyards.

Another object of the present invention is to provide detection devices for micro-slips which are simple, economical and compact to be installed in vineyards and which are reliable over time even with prolonged use under difficult climatic conditions, such as, for example, in climates with harsh winters and summers which are hot and sultry.

Another object of the invention is to provide a system for monitoring areas which are subject to micro-slips which is also effective without any need for the intervention of specialist operators.

In order to achieve these and other objects, the invention relates to a sensorized vineyard pole as defined in the appended claims. The invention also relates to an installation of espalier type vineyard comprising such sensorized vineyard poles, and a method which is particularly suitable for using such an installation in preventing, monitoring and resolving micro-slips in reliefs which are cultivated with vineyards. The invention further relates to the use of such a sensorized vineyard pole for detecting and predicting surface landslips in a vineyard, as set out in the appended claims.

According to a first aspect, there is described a sensorized vineyard pole for supporting a row in an espalier type vineyard, in particular on a slope. The sensorized vineyard pole is configured to detect the surface landslide phenomena and comprises a structural body and a detection device which in turns comprises an electronic assembly arranged on the structural body and supported thereby which comprises a plurality of elements which include at least one inclination and/or movement sensor suitable for detecting the inclination and/or movement of said sensorized vineyard pole. There is further included between the elements of the electronic assembly an electronic controller which is programmed to emit an event signal which indicates a signal which is sent to the electronic controller from the inclination and/or movement sensor. A transmitter which is connected to the electronic controller is provided to transmit the event signal which is emitted by the electronic controller. Such a sensorized pole allows the above-indicated objects to be achieved in a simple and economic manner. The electronic assembly and the structural body of the sensorized vineyard pole can advantageously be produced in series so as to be able to be marketed ready for use for the installation. The sensorized therefore achieves the double objective of being a structural element of the vineyard and, at the same time, an intelligent element for detecting data of interest, in particular in relation to the surface slip phenomena.

According to a particular aspect, the structural body of the sensorized vineyard pole has a main extent along a longitudinal axis and the electronic assembly can be arranged in a portion of the longitudinal development of the sensorized pole. The portion in which the electronic assembly is arranged can be at most half of the longitudinal development, preferably at most one third of the longitudinal development, even more preferably at most a quarter of the longitudinal development of the sensorized vineyard pole. The electronic assembly is thereby confined in a delimited portion of the sensorized pole, with advantages in terms of compactness and simplicity of maintenance. In a particular variant, the electronic assembly may be arranged near the upper end of the pole with sensors so as to be more sensitive to the micro-slips.

According to another particular aspect, there may be defined in the structural body of the sensorized pole a housing in which to arrange the electronic assembly which is thereby sheltered and protected from atmospheric agents and possible impacts of machinery items during, for example, pruning or harvesting.

According to another particular aspect, the electronic assembly may further comprise a source of electrical power which may include a battery of the non-rechargeable type with a long life or of the rechargeable type, possibly connected to an electrical energy generator. This configuration allows having access only rarely to the electronic assembly in order to replace the power supply batteries. When rechargeable batteries are used, it is possible to provide a solar panel as a generator of electrical energy. The solar panel can be advantageously arranged in the region of or near the upper end of the vineyard pole with sensors so as to be completely exposed to the solar radiation without being covered by the shoots of the vines.

According to another particular aspect, the electronic assembly may also comprise an accelerometer which is advantageous for supplying complementary information items about the micro-slips, such as the displacement velocity and inclination in conjunction with the inclination and/or movement sensor.

According to another particular aspect, the electronic controller may be configured to transmit a unique identification code which is associated with the sensorized vineyard pole which uniquely identifies the geographical position thereof in the vineyard with respect to the other sensorized vineyard poles. It is thereby possible to precisely map the micro-slip events which are detected in the vineyard area.

According to another particular aspect, the electronic controller may be configured to transmit a time stamp which identifies the time at which the inclination and/or movement sensor detected a variation in the inclination and/or movement of the sensorized vineyard pole It is thereby possible to construct time mappings with a recording of the events which shows the development of the slip phenomena over the course of time inside the area monitored by the sensorized pole(s).

According to another particular aspect, the vineyard pole with sensors may further comprise an antenna for remotely transmitting the data detected by the electronic assembly. The antenna may be arranged in the region of or near the upper end of the sensorized vineyard pole so as to increase the transmission radius and to allow the interaction with a remote receiving station positioned far away without the signal being attenuated by the adjacent vine plants.

According to a different aspect, there is described an espalier type vineyard installation, in particular cultivated on a slope, comprising a combination of sensorized vineyard poles which have the features indicated above, and common vineyard poles without sensors. The combination of said sensorized vineyard poles and poles without sensors is configured to generally support rows of the espalier type vineyard. In this manner, it is possible to monitor even a fairly large area with reduced costs and ensuring good support of the rows of the vineyard.

According to a particular aspect, the espalier type vineyard installation provides for the installation of at least some of the sensorized poles as head poles of the rows of the vineyard. The head poles are generally thicker and more resistant than the intermediate poles of the rows and therefore are highly suitable for receiving the electronic assembly for its sensorization. According to another particular aspect, the espalier type vineyard installation provides for the sensorized vineyard poles to be distributed regularly in the rows of the espalier type vineyard. There is thereby generated a topology of the detection network in the area of the vineyard of particular interest during the steps of processing the data resulting from the sensorized vineyard poles which allows in-depth and precise ad hoc analysis to be carried out with respect to the range of displacements and therefore of the landslips.

According to another particular aspect, the espalier type vineyard installation provides for the presence of a concentrator, which is arranged near the vineyard and the function of which is to receive as input all the data sent by the sensorized vineyard poles which are distributed in the area of the vineyard, including the event signals which are transmitted thereby. The provision of such a concentrator as a means for collecting the signals allows lower costs to be obtained in terms of hardware of the individual sensorized vineyard poles , drastically extending the service-life of the batteries and increasing the data-processing security by generating a single protected access point towards the nodes of the data-processing network. Furthermore, the bandwidth consumption is thereby optimized as a result of the possibility of gathering the data from the various sensorized poles and transmitting them with optimized communication protocols or at times with greater bandwidth availability.

According to another aspect, there is described a method for detecting surface slip phenomena in vineyards via an installation of sensorized vineyard poles of the type described above, wherein the data transmitted by the poles are processed by a computer so as to provide analytical information items regarding the onset and progression of surface slip phenomena in the area in which the vineyard extends. This approach allows information of extreme interest to be obtained for the small/medium viticulturists who are extremely vulnerable to the risks arising from any reductions of profitability caused by parts of the ground on which the vineyard develops through the deployment of devices and infrastructure for detecting, processing and sharing economic data which are accessible and lean. Furthermore, the information gathered may be of great interest to public institutions for checking, preventing and managing the risks in the territory.

### Brief description of the drawings

Additional features and advantages will become evident from the following detailed description of a preferred embodiment with reference to the appended drawings which are provided by way of non-limiting example and in which:
- Figure 1 is a perspective view of a vineyard on a slope with rows supported by vineyard poles, some of which are sensorized by means of electronic devices for detecting surface landslide phenomena, incorporating features of the present invention;
- Figure 2 is a drawing of an example of one possible embodiment of an electronic detection device used in the vineyard of Figure 1; and
- Figure 3 is a detailed view of an end of a sensorized vineyard pole with an electronic detection device which is integrated inside the structural body thereof.

### Detailed description

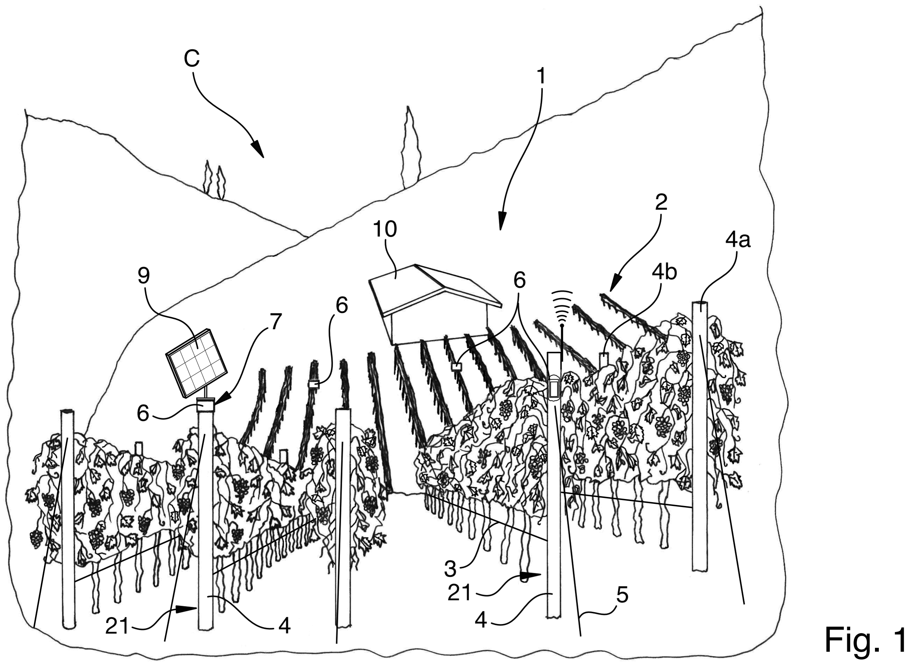

Now with reference to Figure 1, there is illustrated by way of example a vineyard 1 which develops along the slopes of a hilly area C. The vineyard 1 is produced with an espalier type installation, in which the vegetation surface of the vines develops along rows 2 which are substantially perpendicular to the ground. The shoots of the vines are supported by wires 3, usually metal wires which are spaced apart by approximately from 30 to 40 cm and which are supported by groups of poles 4. Each group of poles 4 comprises at the ends thereof two respective head poles 4a which are anchored to the ground by means of anchors 5 of the generally known type, such as, for example, helical anchors. Typically, but in a non-exclusive manner, the head poles 4a are thicker and taller than the other intermediate poles 4b. Often, the head poles 4a are also thicker at the base in order to better withstand the loads which can be caused, for example, by the wind. The poles 4a, 4b, collectively indicated as poles 4, can be made of various materials, the most frequent of which involve wooden poles, poles made of precompressed reinforced concrete or steel poles.

Some of the poles 4 are provided with a detection device 6 which is intended to detect any surface landslide phenomena, also called micro-slips or micro-landslips, typically having a fracture line of modest length, for example, though in a non-limiting manner, no greater than approximately two metres.

The detection device 6 comprises a group of electronic components or electronic assembly 23 which is described in greater detail below. The detection device 6 may be incorporated in the pole 4, for example, during the production process thereof, or may be coupled to or incorporated in the pole 4 subsequently, for example, in order to provide a pre-existing vineyard 1 with the detection functionalities for the micro-slips.

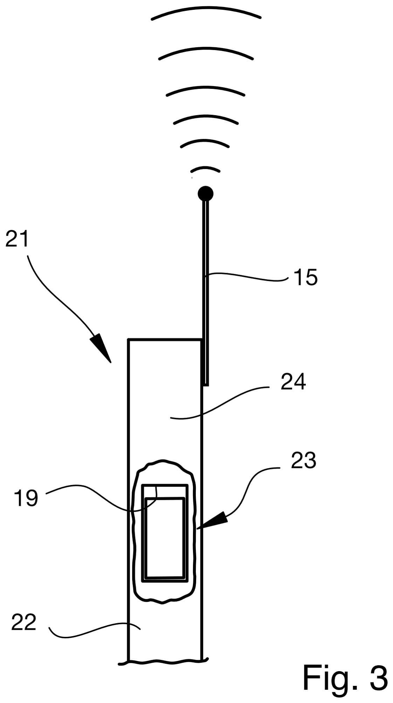

As illustrated in Figure 3, the vineyard pole provided with the electronic assembly 23 constitutes a sensorized vineyard pole 21 with a structural body 22 suitable for receiving the electronic assembly 23, for example, in a recess or internal housing 19, preferably near the upper end 24 or top of the pole. The structural body 22 preferably has such mechanical strength and technical features as to withstand the loads imposed by the rows 2 of vines which it supports, in particular when it is used as a head pole 4a. The electronic components which form the electronic assembly 23 may be advantageously grouped together in a limited part of the structural body 22 with resultant advantages such as the optimization of the electrical connections as a result of the closeness of the components and electronic devices or more generally a more compact overall size of the electronic assembly 23. For example, the electronic assembly 23 can be confined in half of the structural body of the pole or even less, for example, in a quarter of the longitudinal development thereof, preferably in the upper quarter as can be seen in Figure 3.

Preferably, the detection device 6, in particular the electronic assembly 23, whether it is integrated in or added to the pole 4, is placed at the top or near the top of the pole 4 so as to increase the sensitivity to micro-slips, on the one hand, and to remain outside the radius of action of the agricultural machinery for processing the vineyard, on the other hand.

If the detection device 6 is integrated in the pole 4, it may be positioned inside the pole 4 itself, for example, in a recess 19 which is formed for this purpose, or - in the case of tubular poles - inside the tubular cavity of the pole itself. In this manner, the detection device 6, in particular the electronic assembly 23, is protected from the atmospheric agents and from impacts and collisions, for example, brought about by agricultural means or animals. In any case, the detection device 6 can be enclosed in a casing 7, preferably a hermetic and/or fluid-tight casing, in order to protect it, for example, from condensate, brine, atomized products for treating the vines, powders, insects, etc. Using a hermetic and/or fluid-tight casing 7 is particularly useful and advantageous when the detection device 6 is applied to the exterior of the pole 4, for example, in order to retrofit a pre-existing vineyard 1. The use of the casing 7 is in any case also useful if the detection device 6 or the electronic assembly 23 thereof are incorporated or inserted into the structural body 22 of the sensorized pole 21 because in this manner not only is the detection device protected, for example, from humidity, but also its potential removal for maintenance, examination or replacement is simple.

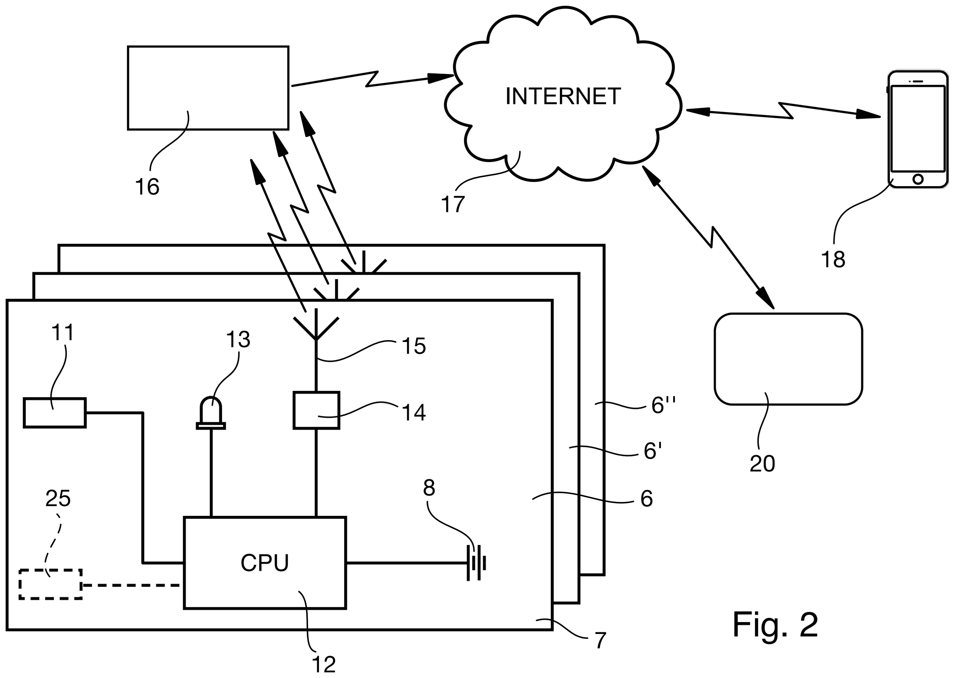

The detection device 6 is powered by an electric battery 8 (can be seen in Figure 2) which can be of the non-rechargeable long-life type, for example, with a service-life of up to five years. Alternatively, the electric battery 8 may be of the rechargeable type, for example, via a solar panel 9 or other generator of energy, for example, a wind generator. In this case, particular importance is attributed to the fact that the detection device 6 is mounted on the top of the pole 4 or near the top so that the solar panel 9 is near the detection device 6 and in a raised position which is optimum for receiving the solar illumination without being covered by the vegetation and without substantially covering in turn the vegetative surface of the vineyard.

In any case, the detection device 6 has very low power consumption and the battery does not need to be recharged often or, if it is not rechargeable, does not need to be frequently replaced. In fact, it is advantageous for the detection device 6 to remain in a stand-by condition until it detects an inclination or movement event. In the absence of such events, it may be advantageously provided for the detection device 6 to emit a daily presence signal or a signal at another predetermined frequency in order to signal that it has been switched on, even though on stand-by. As will be better described below, the detection device 6 can detect a movement and/or inclination event of the pole 4 on which it is mounted and can transmit a corresponding event signal to a concentrator 16 (can be seen in Figure 2) which can be placed in a sheltered location, for example, in a building 10 (illustrated in Figure 1) near the vineyard 1 or directly on one of the poles 4 or on another support structure near or inside the area involving the vineyard.

There may be arranged in the vineyard 1 various detection devices 6 integrated or coupled to different poles 4 which are distributed in the vineyard in order to thereby form a series of sensorized vineyard poles 21, preferably interspersed with other normal vineyard poles 4 without sensors. The sensorized vineyard poles 21, that is to say the poles 4 provided with the detection devices 6, are distributed in the vineyard 1 according to a pattern which may be regular or also irregular, for example, adapted to the particular formation of the slopes, possibly increasing the number of detection devices at locations where the slope is steeper or at greater risk of micro-slips. The various detection devices 6 distributed in the vineyard can be provided to transmit respective event signals all to the same concentrator or to different concentrators which are positioned at different places and which are connected logically to each other. Each detection device is provided with an individual identification code which is transmitted to the concentrator so that a management program can geolocate each detection device in order to map the events which are signalled by the various event signals. Simply by way of non-limiting example, in a vineyard which may comprise several hundreds of poles 4, there may be provided from ten to twenty detection devices 6 which are distributed over the entire area of the vineyard 1.

In the simplest embodiment, each detection device 6 can transmit scalar event signals which indicate, for example, an absolute displacement or inclination value of the pole on/in which the detection device 6 is mounted or integrated. In more complex embodiments, each detection device 6 can transmit vectorial event signals, that is to say signals which indicate both the absolute value and the direction of a displacement or inclination of the pole on/in which the detection device 6 is mounted or integrated. In any case, it is advantageous for the detection device 6 to also transmit a time data item of the time at which it detected the event, together with the event signal, whether scalar or vectorial. Alternatively, the time data item can be associated with the event signal by the concentrator or by any other electronic processing system which is located along the transmission chain of the information items coming from the detection device which is mounted or integrated in/on the pole 4. Naturally, it is possible to equip the detection device 6 so that it can also transmit information items relating to the movement or inclination velocity, for example, by fitting the detection device 6 with an accelerometer 25, which is indicated with a broken line in Figure 2. It may also be advantageous to further fit one or more detection devices 6 which are positioned in the vineyard 1 in order to detect and transmit meteorological information items, for example, by incorporating also meteorological sensors of a generally known type in the detection device 6.

Now with reference to Figure 2, there are schematically illustrated three identical detection devices 6, 6', 6" which can be mounted or integrated on three different poles 4 in the vineyard 1. Each detection device 6 is powered by the electric battery 8 mentioned above, which may be possibly rechargeable. The detection device is provided with at least one sensor 11 which is suitable for detecting the inclination of the casing 7 of the detection device 6, consequently detecting the inclination of the pole 4 in/to which the detection device 6 is integrated or coupled. Additionally or alternatively, the detection device 6 can be provided with the accelerometer 25 which detects the movement or the vibration of the pole 4 in/to which the detection device 6 is integrated or mounted.

The detection device 6 is provided with a microprocessor 12 (CPU) which detects a signal which is sent by the inclination sensor 11 or by another suitable sensor. The microprocessor 12 can control a potential optional signalling device, for example, a light signalling device such as an LED 13, which can signal that the detection device 6 is switched on or a recent activation thereof and/or the occurrence of a transmission of an event signal following inclination or movement of the pole 4 on/in which the detection device 6 is mounted or integrated. Furthermore, the LED 13 can where applicable also provide other states of the detection device 6, for example, using different colours and/or particular intermittences. For example, via the signalling device it is possible to visually signal whether the detection device 6 is switched on and in that case whether the battery 8 is sufficiently charged.

The microprocessor 12 can also control a wireless transmission module 14, for example, a WiFi transmission module, or BLE or another similar type which, by means of an antenna 15, transmits remotely to the concentrator 16 by means of a direct point-to-point connection or a wireless network data relating to the events which are detected by the detection device 6. In this manner, it is possible to check the state of the ground on which the poles 4 which are provided with the various detection devices 6, 6', 6'', etc, distributed in the vineyard 1 are erected. The concentrator 16 can locally process the data from the various detection devices and/or transmit information items, for example, via the Internet 17, to one or more mobile devices 18 and/or to one or more servers 20 or equivalent processing systems. Naturally, as indicated above, each detection device 6, 6', 6'', etc., is identified by a unique identification code which is transmitted together with the event signal so as to identify each detection device in the area of the vineyard 1. As indicated above, the transmission can further advantageously also comprise a time stamp in order to provide information items relating to the date and time at which the event involving possible landslip which caused the inclination or the movement of the pole, on which the detection device 6 is mounted, occurred.

All the information items relating to the possible landslips are, for example, sent to cloud servers which, in addition to storing them, generate timely warning messages which are sent to predetermined destinations by means of one or more communication channels, such as email, sms, instantaneous messaging systems, such as WhatsApp^{®}, or notifications on smartphone, tablet, etc., by means of dedicated apps.

The transmission of the data items sent by each detection device can advantageously be used, via dedicated software programs for the purpose, not only to historically record and document the landslide events of the ground on which the vineyard 1 is located, but also - and particularly - for the predictive analysis of potential landslide phenomena. Using the system of the present invention, it is possible to provide analytical information items relating to the possible onset and progression of surface landslide phenomena in the area in which the vineyard is located. Furthermore, the collection of data from the detection devices 6 can be used to check the stability and efficacy of any engineering restoration solutions which have been adopted in order to remedy any preceding landslips.

The system for detecting micro-slips described above may be suitable for equivalent and similarly advantageous variants . For example, one or more detection devices can be mounted or integrated on/in independent poles, which are remote from the rows of the vineyard, for example, in order to detect possible micro-slips in areas neighbouring the vineyard.

Naturally, the principle of the invention remaining the same, the forms of embodiment and details of construction may be varied widely with respect to those described and illustrated without thereby departing from the scope of the present invention.

## Claims

1. A sensorized vineyard pole (21) for supporting a row in an espalier type vineyard (1), in particular on a slope, configured to detect surface landslide phenomena comprising a structural body (22) and a detection device (6) comprising an electronic assembly (23) which is arranged on the structural body (23) and supported thereby, wherein said electronic assembly (23) comprises a plurality of elements which include:
- at least one inclination and/or movement sensor (11) suitable for detecting the inclination and/or movement of said sensorized vineyard pole (21);
- an electronic controller (12) which is programmed to emit an event signal which indicates a signal which is sent to the electronic controller from the inclination and/or movement sensor (11); and
- a transmitter (14) which is connected to the electronic controller (12) and provided to transmit the event signal which is emitted by the electronic controller.

2. A sensorized vineyard pole according to claim 1, wherein the structural body (22) has a main extent along a longitudinal axis, the electronic assembly (23) being arranged in a portion of the longitudinal development, said portion being at most half of the longitudinal development, preferably at most one third of the longitudinal development, even more preferably at most a quarter of the longitudinal development of the sensorized vineyard pole.

3. A sensorized vineyard pole according to claim 2, wherein the electronic assembly (23) is arranged near an upper end (24) of the structural body (22) opposite a lower end which is intended during use to be fixed in the ground.

4. A sensorized vineyard pole according to any one of the preceding claims, comprising a housing (19) which is defined in the structural body (22), the electronic assembly (23) being arranged in the housing.

5. A sensorized vineyard pole according to any one of the preceding claims, wherein the electronic assembly (23) further comprises a source of electrical power (8) which includes a battery of the non-rechargeable type with a long life or of the rechargeable type connected to an electrical energy generator.

6. A sensorized vineyard pole according to the preceding claim, wherein the battery is rechargeable and the electrical energy generator is a solar panel (9) which is arranged in the region of or near the upper end (24) of the structural body (22).

7. A sensorized vineyard pole according to any one of the preceding claims, wherein the electronic assembly (23) further comprises an accelerometer (25).

8. A sensorized vineyard pole according to any one of the preceding claims, wherein the electronic controller (12) is configured to transmit a unique identification code which is associated with the sensorized vineyard pole which uniquely identifies the geographical position thereof in the vineyard with respect to other sensorized vineyard poles.

9. A sensorized vineyard pole according to any one of the preceding claims, wherein the electronic controller (12) is configured to transmit a time stamp which identifies the time at which the inclination and/or movement sensor (11) detected a variation in the inclination and/or a movement of the sensorized vineyard pole.

10. A sensorized vineyard pole according to any one of the preceding claims, further comprising an antenna (15) for remotely transmitting the data detected by the electronic assembly (23), the antenna (15) being arranged in the region of or near an upper end (24) of the structural body (22) opposite a lower end which is intended during use to be fixed in the ground.

11. An espalier type vineyard installation, in particular cultivated on a slope, comprising a combination of:
- sensorized vineyard poles (21) according to any one of the preceding claims; and
- common vineyard poles without sensors;
wherein the combination of said sensorized vineyard poles and poles without sensors is configured to overall support rows of the espalier type vineyard.

12. An espalier type vineyard installation according to claim 11, wherein at least some of the head poles (4a) of the rows of the vineyard are sensorized vineyard poles (21).

13. An espalier type vineyard installation according to claim 11 or claim 12, wherein the sensorized vineyard poles are distributed regularly in the rows of the espalier type vineyard.

14. An espalier type vineyard installation according to any one of claims 11 to 13, further comprising a concentrator (16) which is arranged near the area in which the vineyard (1) is located and is provided to receive the data, including the event signals, which are transmitted by the sensorized vineyard poles which are distributed in the area of the vineyard (1).

15. A method for detecting surface landslip phenomena in vineyards, in particular cultivated on slopes, comprising an installation according to any one of claims 11 to 14, wherein the data transmitted by the sensorized vineyard poles are processed by an electronic elaborator so as to provide analytical information items regarding the onset and progression of surface landslip phenomena in the area in which the vineyard extends.

16. Use of a sensorized vineyard pole (21) according to any one of claims 1 to 10 for detecting and predicting surface slips in an espalier type vineyard on a slope.
